# EUROPÄISCHE PATENTANMELDUNG

(11) **EP 3 719 594 A1**
(43) Veröffentlichungstag der Anmeldung: **07.10.2020**
(21) Anmeldenummer: 19166528.0
(22) Anmeldetag: 01.04.2019
(51) Int. Cl.: G05B 19/042

(54) **VERFAHREN UND SYSTEM ZUM BETREIBEN EINES INDUSTRIELLEN AUTOMATISIERUNGSSYSTEMS**

(71) Anmelder: Siemens Aktiengesellschaft, 80333 München (DE)
(72) Erfinder: Franze, Volker, 91207 Lauf an der Pegnitz (DE); Geipel, Markus Michael, 80799 München (DE); Hammon, Harald, 90471 Nürnberg (DE); Rottmann, Axel, 81825 München (DE); Weinert, Kai, 90518 Altdorf (DE)

(57) **Zusammenfassung**

Zusammenfassend betrifft die vorliegende Erfindung ein Verfahren und ein System zum Betreiben eines industriellen Automatisierungssystems 10, wobei das industrielle Automatisierungssystem 10 mindestens ein industrielles Automatisierungsgerät 11, 12, 13 umfasst. Das Verfahren umfasst die Schritte: Empfangen S1 durch ein System 100 Automatisierungsdaten 20 des industriellen Automatisierungsgerätes 11, 12, 13 des industriellen Automatisierungssystems 10 und Metadaten 30, die für das Automatisierungsgerät 11, 12, 13 spezifisch sind; Speichern S2 der empfangenen Automatisierungsdaten 20 und der empfangenen Metadaten 30 des industriellen Automatisierungsgerätes 11, 12, 13 jeweils in einem separaten Datenmodell 40 des jeweiligen Automatisierungsgerätes 11, 12, 13 in einer Speichereinheit 102 des Systems 100, wobei jedes Datenmodell 40 einzelne Datenobjekte 41 umfasst, welche die Automatisierungsdaten 20 und Metadaten 30 des betreffenden Automatisierungsgerätes 11, 12, 13 beinhalten;
Ermitteln S3 von Datenobjekteigenschaften 42 der einzelnen Datenobjekte 41;
Erzeugen S4 eines Automatisierungssystemmodells 50 des industriellen Automatisierungssystems 10 durch Verlinken derjenigen Datenobjekte 41 Datenmodelle 40, die eine Übereinstimmung in ihren ermittelten Datenobjekteigenschaften 42 aufweisen; und
Betreiben S5 des industriellen Automatisierungssystems 10 auf Basis von Informationen aus dem Automatisierungssystemmodell 50, die automatisch oder auf eine Suchanfrage eines Anwenders hin aus dem erzeugten Automatisierungssystemmodell 50 abgeleitet werden.

Diesbezüglich wird automatisch unter Verwendung der in einem Automatisierungssystem zur Verfügung stehenden Daten ein Automatisierungssystemmodell erzeugt, in dem die zueinander gehörigen Daten mit einander verlinkt sind und aus welchen Informationen zum Betreiben des Automatisierungssystems abgeleitet werden können. Das Automatisierungssystemmodell kann für Automatisierungssystemspezifische Anfragen und Lösung von Betriebsfehlern eingesetzt werden.

## Beschreibung

Automatisierungssysteme erzeugen pro Sekunde eine große Menge an Daten. Beispielsweise messen Sensoren die Geschwindigkeit und Qualität der Fertigung, Steuerungen generieren und speichern relevantes Wissen über die Zustände in dem Automatisierungssystem und den Automatisierungsgeräten. Mit jeder Änderung in dem Automatisierungssystem und mit jedem neu herzustellenden industriellen Produkt werden neue Daten und Wissen erzeugt und gespeichert. Allerdings liegen diese Daten und das Wissen in unterschiedlichen und verteilten Anwendertools/Anwenderprogrammen und/oder unterschiedlichen Datenmodellen vor, die zueinander keine Verknüpfung oder Schnittstelle aufweisen. Somit haben die gespeicherten Daten oder Datenmodelle wenig oder gar nichts miteinander zu tun und eignen sich deshalb nicht für das Betreiben der Automatisierungssystem und eine automatisierte Lösung von Betriebsfehlern. Eine automatisierte Problemlösung setzt verknüpfte Daten aus dem gesamten Automatisierungssystem voraus, bei denen Verlinkung zwischen den Daten bestehen und die in Beziehung zu einander stehen.

In bekannten Verfahren sind die Daten eines Automatisierungssystems in verschiedenen Steuerungen und/oder Servern hinterlegt und mit einander nicht verknüpft, so dass keine Beziehungen zwischen den Daten erstellt werden können. Diese Verknüpfungen werden, wenn benötigt, durch einen menschlichen Anwender angelegt. Allerdings umfasst dieses Verknüpfen nur ein Vergleichen von Annotationen und somit das Zuordnen von gleichnamigen Annotationen. Ein Zuordnen eines Automatisierungsgerätes und beispielsweise einer zugehörigen Funktion in der Designbeschreibung, die eine andere Bezeichnung als das Automatisierungsgerät aufweist, ist gar nicht oder nur sehr aufwendig möglich. Somit steht kein ganzheitliches Datenmodell für den Betrieb eines Automatisierungssystems zur Verfügung.

Es ist daher Aufgabe der vorliegenden Erfindung ein Verfahren und ein System zum Betreiben eines industriellen Automatisierungssystems auf Basis von Informationen aus einem Automatisierungssystemmodell bereitzustellen.

Diese Aufgabe wird erfindungsgemäß durch ein Verfahren und ein System zum Betreiben eines industriellen Automatisierungssystems mit den in den Patentansprüchen 1 und 8 angegebenen Merkmalen gelöst.

Die Erfindung schafft demnach ein Verfahren zum Betreiben eines industriellen Automatisierungssystems, wobei das industrielle Automatisierungssystem mindestens ein industrielles Automatisierungsgerät umfasst, mit den Schritten:
Empfangen durch ein System von Automatisierungsdaten des industriellen Automatisierungsgerätes des industriellen Automatisierungssystems und von Metadaten die für das Automatisierungsgerät spezifisch sind;
Speichern der empfangenen Automatisierungsdaten und der empfangenen Metadaten des industriellen Automatisierungsgerätes jeweils in einem separaten Datenmodell des jeweiligen Automatisierungsgerätes in einer Speichereinheit des Systems, wobei jedes strukturierte Datenmodell einzelne Datenobjekte umfasst, welche die Automatisierungsdaten und Metadaten des betreffenden Automatisierungsgerätes beinhalten;
Ermitteln von Datenobjekteigenschaften der einzelnen Datenobjekte der Datenmodelle;
Erzeugen eines Automatisierungssystemmodells des industriellen Automatisierungssystems durch ein Verlinken derjenigen Datenobjekte der Datenmodelle, die eine Übereinstimmung in ihren ermittelten Datenobjekteigenschaften aufweisen; und
Betreiben des industriellen Automatisierungssystems auf Basis von Informationen aus dem Automatisierungssystemmodell, die automatisch oder auf eine Suchanfrage eines Anwenders hin aus dem erzeugten Automatisierungssystemmodell abgeleitet werden. Im Sinne der vorliegenden Erfindung sind unter Metadaten strukturierte Daten zu verstehen, die Informationen über Merkmale anderer Daten enthalten. Zu den Metadaten einer Computerdatei gehören beispielsweise der Dateiname, Zugriffsrechte und/oder das Datum der letzten Änderung der Datei.

Zudem sind im Sinne der vorliegenden Erfindung unter den Automatisierungsdaten diejenigen Daten zu verstehen, die durch das Automatisierungssystem und/oder die Automatisierungsgeräte erzeugt werden.

Der vorliegenden Erfindung liegt die Erkenntnis zu Grunde, dass ein Bedarf an einem strukturierten Automatisierungssystemmodell zum Betreiben eines Automatisierungssystems besteht.

In vorteilhafter Weise können die von dem Automatisierungssystem und von den in dem Automatisierungssystem enthaltenden Automatisierungsgeräte erzeugten Automatisierungsdaten strukturiert in dem Automatisierungssystemmodell hinterlegt werden bzw. kann das Automatisierungssystemmodell strukturiert mit Daten und/oder Verlinkungen auf Daten angereichert werden. Es werden in vorteilhafter Weise unterschiedliche und separate Datenmodelle mit unterschiedlicher Datenstruktur zu einem einzelnen Datenmodell angereichert, aus dem die Daten gezielt abgerufen werden können. Diesbezüglich wird automatisch eine Verlinkung der Automatisierungsdaten untereinander und zusätzlich zu den empfangenen Metadaten bereitgestellt. Dies ermöglich eine Verknüpfung der Daten zueinander und somit eine gleichzeitige, umfangreichere und detaillierte Ausgabe an Daten bei einer Suchanfrage durch einen Anwender. Somit kann das Automatisierungssystemmodell auf Anfragen von Anwendern mit Bezug auf das Automatisierungssystem oder Automatisierungsgerät automatische Lösungen für Fehlerfragestellungen bereitstellen. Insbesondere werden einem Anwender alle zur Verfügung stehenden Daten zur Lösung eines Betriebfehlers zur Verfügung gestellt.

Vorteilhafte Ausführungsformen und Weiterbildungen ergeben sich aus den Unteransprüchen, sowie aus der Beschreibung unter Bezugnahme auf die Figuren.

In einer vorteilhaften Ausführungsform erfolgt das Verlinken der Datenobjekte durch semantisches Verlinken. In vorteilhafter Weise kann durch ein Verlinken das Automatisierungssystemmodell des Automatisierungssystems angereichert werden. Hierfür werden Inhalte, Bezeichner, Überschriften, Metadaten, Texte, Teaser jeder Art in den Datenmodellen analysiert und wichtige Themen und Schlüsselwörter erkannt. Zudem wird für das semantische Verlinken auch die Bedeutung als Schwerpunkt der Suchabfrage berücksichtigt. Die Suchabfrage wird präziser, da die Verlinkungen der einzelnen Datenmodelle dichter und umfangreicher werden.

In einer Ausführungsform kann das Verlinken der derjenigen Datenobjekte durch Relationen erfolgen, die eine Menge an Datensätzen beschreiben, deren Zugehörigkeit festgelegt ist. Eine Relation kann die Form einer Tabelle aufweisen und ist demnach eine Verknüpfung von Zeilen und Spalten. Durch die Relationen können logisch zusammengehörende Daten gespeichert werden.

In einer vorteilhaften Ausführungsform umfassen die Automatisierungsdaten Sensordaten. In vorteilhafter Weise werden alle in einem Automatisierungssystem erzeugten und durch die Sensoren erfassten Daten in dem Automatisierungssystemmodell mit Verknüpfungen zu dem Sensor, zu dem Automatisierungsgerät, zu Automatisierungsprojekten strukturiert abgelegt und sind somit einfacher abrufbar und verwertbar.

In einer weiteren vorteilhaften Ausführungsform umfassen die Automatisierungsdaten Aktuator-Daten. In vorteilhafter Weise werden alle bereitgestellten und erfassten Aktuator-Daten strukturiert abgelegt und sind somit einfacher abrufbar und verwertbar.

In einer weiteren vorteilhaften Ausführungsform umfassen die Automatisierungsdaten Berechnungsdaten. In vorteilhafter Weise können in dem Automatisierungssystemmodell Ergebnisse von Berechnungen und/oder Auswertungen an Daten des Automatisierungssystems und/oder des Automatisierungsgerätes strukturiert abgelegt werden und stehen somit für eine automatische Lösung von Betriebsfehlern zur Verfügung.

In einer weiteren vorteilhaften Ausführungsform umfassen die Automatisierungsdaten Kommunikationsdaten. In vorteilhafter Weise können in dem Automatisierungssystemmodell die Kommunikationsdaten der Industriegeräte zueinander und/oder mit Bezug zu dem Automatisierungssystem strukturiert abgelegt werden. Die Kommunikationsdaten können für ein Bestimmen an Beziehungen zwischen den Daten und dem Automatisierungssystem und den Automatisierungsgeräten verwendet werden, wodurch eine verbesserte strukturierte Verlinkung erfolgen kann.

In einer weiteren vorteilhaften Ausführungsform umfassen die Metadaten Annotationen, Spezifikationen und/oder Daten zur Beschreibung des industriellen Automatisierungsgerätes.

Annotationen stellen eine Anmerkung, beispielsweise zur Beschriftung und Bezeichnung eines Automatisierungsgerätes oder einer Komponente eines Automatisierungsgerätes dar. Die Annotation kann verwendet werden um Automatisierungsgeräte und/oder Komponenten mit gleicher Bezeichnung oder im Gehalt ähnlicher Bezeichnung in unterschiedlichen Modellen zu finden und in dem Automatisierungssystemmodell so zueinander zu verlinken, dass diese bei der Suche nach der Annotation in dem Automatisierungssystemmodell gefunden werden.

Spezifikationen beschreiben und definieren genaue Anforderungen an das Automatisierungssystem und/oder Automatisierungsgerät. Die Spezifikation kann eine genaue Beschreibung des Automatisierungssystem und/oder des Automatisierungsgerätes und somit eine große Menge an Information umfassen, die zur automatischen Problemlösung genutzt werden können. Auf die Spezifikation bzw. die in der Spezifikation hinterlegten Daten kann in vorteilhafter Weise über das Automatisierungssystemmodell zugegriffen werden.

In einer weiteren vorteilhaften Ausführungsform umfassen die Metadaten ein 3D Modell des industriellen Automatisierungsgerätes. In vorteilhafter Weise können in dem Automatisierungssystemmodell strukturiert 3D Modelle des Automatisierungssystems und/oder des Automatisierungsgerätes abgelegt werden. Die 3D Modelle beschreiben beispielsweise die einzelne Anordnung und die Verbindung der Automatisierungsgeräte in dem Automatisierungssystem zueinander. Die Information über die Anordnung, Verbindung und/oder Kommunikation kann für eine automatische Fehlerdetektion und/oder Problemlösung durchgeführt werden.

In einer weiteren vorteilhaften Ausführungsform umfassen die Metadaten Netzwerkdaten und/oder Netzwerkteilnehmer des Automatisierungssystems. In vorteilhafter Weise können Informationen und Zusammenhänge über das Automatisierungssystem und/oder der Automatisierungsgeräte durch die Analyse der Netzwerkdaten und/oder Netzwerkteilnehmer, insbesondere über den Netzwerkeinwahlpunkt erkannt werden und eine automatische Fehlerdetektion und/oder Problemlösung verwendet werden.

In einer weiteren vorteilhaften Ausführungsform umfassen die Metadaten Lokalisierungsinformation. Die Lokalisierungsinformationen enthalten beispielsweise Information über den Ort und/oder den Bereich der Einbindung von Automatisierungsgeräten in das Automatisierungssystem.

In einer weiteren vorteilhaften Ausführungsform umfassen die Metadaten Automatisierungsprojektdaten. In vorteilhafter Weise können somit rückwirkend Information aus der Projektierung des Automatisierungssystems und/oder der Automatisierungsgeräte verwendet werden, um das Automatisierungssystemmodell zu erstellen und die Daten miteinander zu verlinken. Somit können die Automatisierungsprojektdaten für eine automatische Fehlerdetektion und/oder Problemlösung verwendet werden.

In einer weiteren vorteilhaften Ausführungsform ist das strukturierte Datenmodell als ein Knowledge-Graph ausgebildet. Ein Knowledge-Graph umfasst aufbereitete und/oder transformierte Suchergebnisse zu bestimmten Themengebieten innerhalb des Automatisierungssystems und/oder Automatisierungsgerätes. Somit können Automatisierungsdaten und Metadaten von beispielsweise Industriegeräten kumuliert und zu einem Automatisierungssystemmodell zusammengeführt werden. Das Automatisierungssystemmodell kann grafisch dargestellt werden.

In einer weiteren vorteilhaften Ausführungsform ist das strukturierte Datenmodell als eine Ontologie ausgebildet. Eine Ontologie ist eine sprachlich und formal geordnete Darstellung der Automatisierungsdaten und Metadaten und der zwischen Ihnen bestehenden Beziehungen in dem Geltungsbereich des Automatisierungssystems. Die Ontologie kann für einen Austausch von Wissen in digitalisierter und formaler Form zwischen Anwendungsprogrammen und Diensten, insbesondere zwischen dem Automatisierungssystemmodell und einem Anwender zur Fehlerdetektion und/oder Problemlösung in einem Automatisierungssystem verwendet werden.

In einer weiteren vorteilhaften Ausführungsform umfasst das Ermitteln der Datenobjekteigenschaften der Datenobjekte des strukturierten Datenmodells ein Clustern der Datenobjekte. In vorteilhafter Weise können Datenobjekte mit gleichen Eigenschaften zu einem Cluster zu geordnet werden. Dies ermöglich eine strukturierte Anordnung und logische Zusammenfassung gleicher Datenobjekte bzw. Datenobjekte mit gleichen oder vergleichbaren Datenobjekteigenschaften.

In einer weiteren vorteilhaften Ausführungsform kann das strukturierte Datenmodell in einer Datenmodell-Datenbank des industriellen Automatisierungssystems gespeichert werden. In vorteilhafter Weise kann in der Datenmodell-Datenbank das strukturierte Datenmodell effizient, widerspruchsfrei und dauerhaft gespeichert werden.

In einer weiteren vorteilhaften Ausführungsform kann das erzeugte Automatisierungssystemmodell in einer Systemmodell-Datenbank des industriellen Automatisierungssystems gespeichert werden. In vorteilhafter Weise kann die Systemmodell-Datenbank effizient, widerspruchsfrei und dauerhaft mit der großen Menge an Daten des Automatisierungssystems und/oder der Automatisierungsgeräte umgehen und logische Zusammenhänge digital abbilden. In der Systemmodell-Datenbank können die Datenbestände, sowohl die Automatisierungsdaten, als auch die Metadaten zusammengestellt und bedarfsgerecht für Anwenderprogramme bzw. für Suchanfragen bzw. Abfragen der Daten verwendet und angezeigt werden.

Die Erfindung schafft ferner ein System zum Betreiben eines industriellen Automatisierungssystems mit den in Anspruch 8 angegebenen Merkmalen.

Die Erfindung schafft demnach ein System zum Betreiben eines industriellen Automatisierungssystems, wobei das industrielle Automatisierungssystem mindestens ein industrielles Automatisierungsgerät umfasst, umfassend:
zumindest eine Empfangseinheit, die ausgebildet ist, Automatisierungsdaten des industriellen Automatisierungsgerätes des industriellen Automatisierungssystems und Metadaten die für das Automatisierungsgerät spezifisch sind zu empfangen;
zumindest eine Speichereinheit, die ausgebildet ist, die empfangenen Automatisierungsdaten und empfangenen Metadaten des industriellen Automatisierungsgeräts in einem jeweils separaten Datenmodell des jeweiligen Automatisierungsgerätes zu speichern, wobei jedes Datenmodell einzelne Datenobjekte umfasst, welche die Automatisierungsdaten und Metadaten des betreffenden Automatisierungsgerätes beinhalten;
zumindest eine Ermittlungseinheit, die ausgebildet ist, Datenobjekteigenschaften in den einzelnen Datenobjekten der Datenmodelle zu ermitteln;
zumindest eine Erzeugungseinheit, die ausgebildet ist, ein Automatisierungssystemmodell des industriellen Automatisierungssystems durch Verlinken derjenigen Datenobjekte der Datenmodelle, die eine Übereinstimmung in ihren Datenobjekteigenschaften aufweisen, zu erzeugen; und
zumindest eine Ausführungseinheit, die ausgebildet ist, das Automatisierungssystem auf Basis von Informationen die automatisch oder auf eine Suchanfrage eines Anwenders hin aus dem erzeugten Automatisierungssystemmodell abgeleitet werden.

In einer vorteilhaften Ausführungsform erfolgt das Verlinken der Datenobjekte durch ein semantisches Verlinken.

In einer vorteilhaften Ausführungsform des Systems umfasst das System eine Sucheinheit, die ausgebildet ist, Suchanfragen eines Anwenders zu erfassen und den Inhalt in dem erzeugten Automatisierungssystemmodell zu finden. In vorteilhafter Weise können über die Sucheinheit Suchanfragen empfangen werden und relevante Suchergebnisse für einen Anwender bereitgestellt werden. Insbesondere können die bereitgestellten Informationen für eine Impactanalyse in dem Automatisierungssystem verwendet werden. Die Sucheinheit kann eine Such-Oberfläche umfassen, die für die Eingabe von Suchanfragen, beispielsweise für die Eingabe von Schlagwörtern und/oder komplexeren Fragestellungen ausgebildet ist.

In einer weiteren vorteilhaften Ausführungsform des Systems werden die Suchanfragen entsprechend der Anzahl der Nachfragen und des Typs in einem Query-Ranking gespeichert. In vorteilhafter Weise kann das Query-Ranking verwendet werden, um einem Anwender gleich typische Suchanfragen als Vorschlag bereitzustellen.

In einer weiteren vorteilhaften Ausführungsform des Systems umfasst das System ein Anzeigeelement, das insbesondere als ein Touch-Display oder als ein Webinterface ausgebildet ist. Die Such-Oberfläche zur Eingabe der Suchanfrage und für das Anzeigen der Information kann auf einem Touch-Display des Systems oder auf einem Display/Touch-Display eines Automatisierungsgerätes das mit dem System kommuniziert dargestellt werden. Zudem kann die Such-Oberfläche auf einem WebInterface unabhängig von einem Anzeigeelement ausgebildet werden. Beispielsweise kann die Such-Oberfläche in einem Browser auf einem Computer oder einem portablen Gerät, das mit dem System kommuniziert, angezeigt werden.

In einer weiteren vorteilhaften Ausführungsform des Systems umfasst das System eine Speichereinheit. Die Speichereinheit ist ausgebildet, wenigstes das Query-Ranking zu speichern. Die Speichereinheit kann eine erstellte Verlaufsübersicht an Suchanfragen und ein daraus erstelltes Query-Ranking speichern.

Die Erfindung schafft ferner ein Computerprogramm mit Programmcode für das Ausführen eines Verfahrens nach einem der vorherigen Verfahrensansprüche, wenn das Computerprogramm auf einem elektronischen Gerät ausgeführt wird. Das Computerprogramm kann als Signal per Download bereitgestellt oder in einer Speichereinheit einer tragbaren Vorrichtung mit darin enthaltenem computerlesbarem Programmcode gespeichert werden, um ein System zur Ausführung von Anweisungen gemäß dem oben genannten Verfahren zu veranlassen. Die Realisierung der Erfindung durch ein Computerprogrammprodukt hat den Vorteil, dass bereits vorhandene elektronische Geräte, beispielsweise Computer, portable Geräte, Smartphones leicht durch Software-Updates verwendet werden können, um wie von der Erfindung vorgeschlagen, ein industrielles Automatisierungssystem zu betreiben. Ferner können elektronische Geräte genutzt werden, Inhaltsumfassende Suchanfragen zu erfassen und den Inhalt in dem erzeugten Automatisierungsmodell zu finden.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserung oder Ergänzungen zu der jeweiligen Grundform der vorliegenden Erfindung hinzufügen.

Die vorliegende Erfindung wird nachfolgend anhand der in den schematischen Figuren der Zeichnungen angegebenen Ausführungsbeispiele näher erläutert. Es zeigen dabei:
- Fig. 1: ein Blockdiagramm zur Darstellung eines möglichen Ausführungsbeispiels für ein Betreiben eines industriellen Automatisierungssystems;
- Fig. 2: ein Ablaufdiagramm zur Darstellung eines möglichen Ausführungsbeispiels eines erfindungsgemäßen Verfahrens;
- Fig. 3: ein Blockdiagramm zur Darstellung eines Ausführungsbeispiels eines erfindungsgemäßen Verwaltungssystems;
- Fig. 4: ein Blockdiagramm zur Darstellung eines Ausführungsbeispiels eines erfindungsgemäßen Automatisierungssystemmodells.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche, und gleich wirkende Elemente, Merkmale und Komponenten - sofern nichts anderes ausgeführt ist - jeweils mit denselben Bezugszeichen zu versehen.

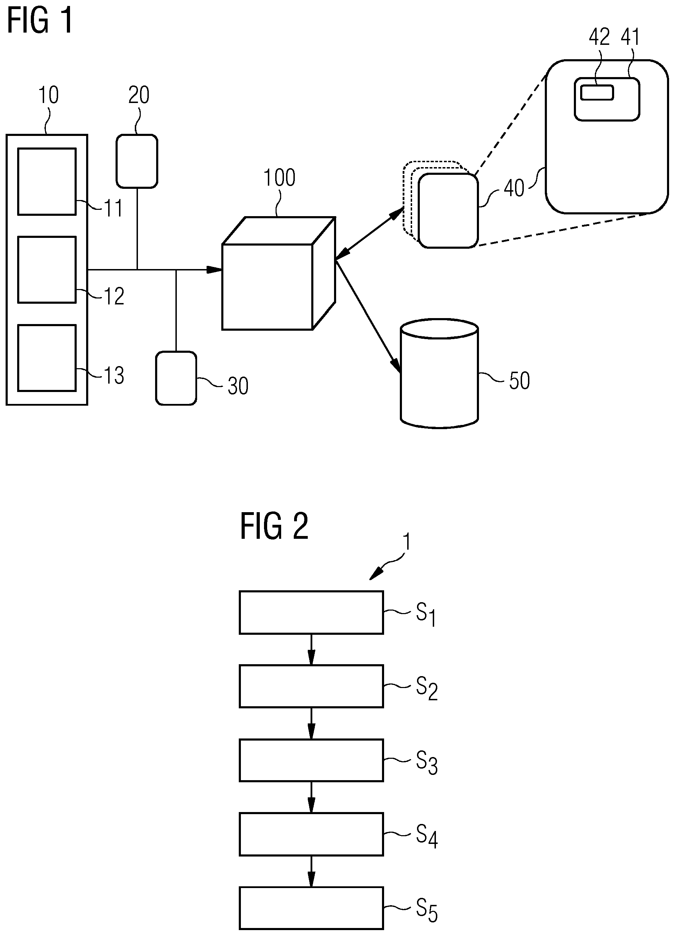

Fig. 1 zeigt ein Blockdiagramm zur Darstellung eines möglichen Ausführungsbeispiels für ein Betreiben eines industriellen Automatisierungssystems 10.

In Fig. 1 bezeichnet Bezugszeichen 100 das System zum Betreiben eines industriellen Automatisierungssystems 10. Das System 100 kommuniziert über eine Kommunikationsverbindung mit einem Automatisierungssystem 10. Die Kommunikationsverbindung kann als eine kabelgebundene oder kabellose Kommunikationsverbindung ausgebildet sein. In einer Ausführungsform kann die Kommunikationsverbindung als eine geschützte Kommunikationsverbindung ausgebildet sein. Das Automatisierungssystem 10 umfasst eine Vielzahl an Automatisierungsgeräte 11, 12, 13, beispielsweise Sensoren, Aktuatoren, Steuereinheiten, die mit dem Automatisierungssystem 10 und/oder mit dem System 100 kommunizieren. Die Anzahl der Automatisierungsgeräte 11, 12, 13 ist nicht auf die dargestellte Anzahl der Automatisierungsgeräte 11, 12, 13 begrenzt. Die in Fig. 1 dargestellten Automatisierungsgeräte 11, 12, 13 dienen vielmehr nur der beispielhaften Darstellung.

Durch das System 100 werden die von den Automatisierungsgeräten 11, 12, 13 und/oder dem Automatisierungssystem 10 verfügbaren Automatisierungsdaten 20 und Metadaten 30, die für das Automatisierungsgeräte 11, 12, 13 spezifisch sind, empfangen. Die Automatisierungsdaten 20 umfassen Sensordaten, Aktuator-Daten, Berechnungsdaten und/oder Kommunikationsdaten. Die Metadaten 30 können Annotation, Spezifikation und/oder Daten zur Beschreibung des industriellen Automatisierungsgerätes 11, 12, 13, insbesondere Maschinenfähigkeiten umfassen. Ferner können die Metadaten 30, insbesondere ein 3D Modell des industriellen Automatisierungsgerätes 11, 12, 13, Netzwerkdaten und/oder Netzwerkteilnehmer des Automatisierungssystems 10, Lokalisierungsinformationen der Automatisierungsgeräte 11, 12, 13 und/oder Automatisierungsprojektdaten, inklusive der Variablen und Variablen umfassen.

Für das Auslesen der Automatisierungsdaten 20 und der Metadaten 30 bzw. der Datenmodelle 40, in denen die Automatisierungsdaten 20 und Metadaten 30 gespeichert sind, können verschiedene Quelltools, beispielsweise TIA Portal, NX-Siemens PLM-Software, E-Plan, Automation Designer, Comos, und/oder Teamcenter verwendet werden. Das "Totally Integrated Automation Portal" (TIA Portal) ermöglicht einen vollständigen Zugriff auf die gesamte digitalisierte Automatisierung von der digitalen Planung über integriertes Engineering bis zum transparenten Betrieb. NX-Siemens PLM-Software ist ein interaktives CAD/CAM/CAE-System, insbesondere ein 3D Modell des Automatisierungsgerätes 11, 12, 13 oder des Automatisierungssystems 10 und ermöglicht einen Zugriff auf alle Konstruktions- und Designdaten. Im E-Plan wird die elektrische Verschaltung des Automatisierungssystems 10 und/oder der Automatisierungsgeräte 11, 12, 13 projektiert und abgebildet. Der E-Plan stellt eine vollständige Übersicht über die elektrische Verdrahtung dar. Der Automation Designer ist ein Tool für das digitale Erstellen und Konzipieren eines Automatisierungsgerätes 11, 12, 13 und/oder Automatisierungssystems 10. In dem Tool wird das Automatisierungsgerät 11, 12, 13 und/oder Automatisierungssystem 10 vollständig virtuell erstellt, simuliert, produziert und optimiert. Das Tool umfasst alle relevanten Daten des Automatisierungsgerätes 11, 12, 13 und/oder Automatisierungssystems 10. Comos ist ein Tool für den Einsatz in der Prozessindustrie für die Planung, Betrieb und Instandhaltung von Automatisierungssystemen 10 und umfasst alle relevanten Daten des Automatisierungssystems 10. Teamcenter ist ein Produkt Lifecycle Management System das alle relevanten Daten des Automatisierungssystems 10 und/oder der Automatisierungsgeräte 11, 12, 13 über den gesamten Lebenszyklus umfasst.

Die durch das System 100 empfangenen Automatisierungsdaten 20 und Metadaten 30 werden in einem strukturieren Datenmodell 40, insbesondere in einem jeweils separaten Datenmodell 40 gespeichert. Beispielsweise kann für jedes Automatisierungsgerät 11, 12, 13 ein Datenmodell 40 und/oder für Automatisierungsdaten 20 und Metadaten 30 ein getrenntes Datenmodell 40 gespeichert werden. Die empfangenen Automatisierungsdaten 20 und die empfangenen spezifischen Metadaten 30 werden zugreifbar in einem Knowledge Graph oder einer Ontologie abgelegt. In Fig. 1 ist ein Datenmodell 40 beispielhaft vergrößert dargestellt. Das strukturierte Datenmodell 40 umfasst einzelne Datenobjekte 41 mit Datenobjekteigenschaften 42, die durch das System 100 ermittelt werden. Das in Fig. 1 dargestellte Datenobjekt 41 stellt keine Begrenzung der Anzahl an enthaltener Datenobjekte 41 in dem Datenmodell 40 dar. Ein Datenobjekt 41 stellt eine Information, zu dem Automatisierungsgerät 11, 12, 13 dar. Beispielsweise wird ein Motor eines Automatisierungssystems 10 durch ein Datenmodel 40 abgebildet. Der Motor erzeugt während der Nutzungsdauer eine bestimmte Anzahl an Automatisierungsdaten 20. Diese können in einem Datenobjekt 41 gespeichert und verwendet werden. Zudem umfasst das Datenmodel 40 weitere Metadaten, wie beispielsweise die Bezeichnung, die Spezifikation des Motors (Leistungskennzahlen), welche als eine Datenobjekt 41 gespeichert und verwendet werden können. Jedes Datenobjekt 41 weist eine Datenobjekteigenschaft 42 auf, an der das Datenobjekt 41 identifiziert werden kann, bzw. die das Datenobjekt 41 identifizierbar beschreibt.

In einer Ausführungsform kann das Datenmodell 40 Dateien umfassen, zwischen denen Verlinkungen erstellt werden können bzw. Verlinkungen zu Datenobjekten 41.

Das System 100 reichert die jeweils separaten Datenmodelle 40 automatisch an und erzeugt semantische Verlinkungen zwischen den in den verschiedenen Datenmodellen 40 mehrfach existierenden Datenobjekten 41. Beispielsweise kann eine Verlinkung zwischen einem Automatisierungsgerät 11, das in dem E-Plan in dem Automatisierungssystem 10 verschaltet dargestellt ist, mit einem Automatisierungsprojekt, in dem das Automatisierungsgerät 11 des Automatisierungssystems 10 spezifiziert wurde, verlinkt werden. In vorteilhafter Weise werden somit Daten zu einer gleichen Informationsbasis mit einander verlinkt und können gemeinsam abgerufen bzw. genutzt werden. Das System 100 bildet beispielsweise ein Cluster um sämtliche Datenobjekte 41, die eine Übereinstimmung in den ermittelten Datenobjekteigenschaften 42 aufweisen und erzeugt somit die notwendige Verlinkung. Um die Übereinstimmung in den Datenobjekteigenschaften 42 zu erkennen, können die Information in den Metadaten, wie z.B. die Zuordnung von Netzwerkteilnehmern im Automatisierungsprojekt zu Automatisierungsgeräten im 3D Modell anhand von Koordination aus der Indoorlokalisierung (Lokalisierungsinformation) oder Leitungslängen verwendet werden. Beispielsweise kann die durch einen Netzwerkscann ermittelte Lokalisierungsinformation über die Einwahl von Netzwerkteilnehmern in ein Netzwerk verwendet werden, um benachbarte Netzwerkteilnehmer, beispielsweise im 3D Modell zu identifizieren.

In einer weiteren Ausführungsform kann eine Verlinkung über das automatische Erkennen und Verarbeiten von Namenskonventionen erreicht werden. Beispielsweise ist das Automatisierungsgerät 11 im 3D Modell und im Projektierungsplan als Stellantrieb 11 bezeichnet, womit automatisch ein Zusammenhang erkannt und eine Verlinkung hergestellt werden kann.

In einer Ausführungsform kann eine Verlinkung durch eine Betrachtung von Zusammenhängen erfolgen. Beispielsweise kann für eine Fehlersuche oder Fehlerkorrektur in einem Automatisierungssystem 10 ein Anwender im Zusammenhang der Fehlersuche zwei Automatisierungsgeräte 11, 12 untersuchen und bewerten. Das System 100 kann diesen Zusammenhang automatisch lernen und eine Verlinkung zwischen den Automatisierungsgeräten 11, 12 herstellen, so dass bei einem erneuten Auftreten eines Fehlers, der Zusammenhang und die Informationen über beide Automatisierungsgeräte 11, 12 dargestellt werden kann. Ferner kann das Verwaltungssystem 100 technische Funktionszusammenhänge und Funktionsweisen einzelner Automatisierungsgeräte 11, 12, 13 des Automatisierungssystems erlernen.

Durch das automatische Verlinken der Datenobjekte 41 der Datenmodelle 40 kann ein Automatisierungsmodel 50 erzeugt werden. In vorteilhafter Weise kann im Rahmen der Verlinkung der Planungsdaten mit den Daten aus dem realen Automatisierungssystem 10 ein Plausibilitäts-Check durchgeführt werden. Durch das Verlinken können Widersprüche zwischen den Planungsdaten und den umgesetzten Planungsdaten in dem Automatisierungssystem 10 erkannt werden. Beispielsweise kann durch einen Scann des Automatisierungssystems 10 erkannt werden, dass fünfzig Automatisierungsgeräte 11, 12, 13 in dem Automatisierungssystem 10 implementiert sind, obwohl im 3D Model nur achtundvierzig Automatisierungsgeräte 11, 12, 13 aufgelistet sind. Der Plausibilitäts-Check kann in vorteilhafter Weise für eine Korrektur des Datenbestandes verwendet werden.

Nach dem Schritt des automatischen Verlinkens der Datenobjekte 41 der Datenmodelle 40 umfasst das erzeugte Automatisierungsmodel 50 sämtliche bekannte Zusammenhänge zwischen den Automatisierungsgeräten 11, 12, 13 und dem Automatisierungssystem 10. Dies ermöglich eine verbesserte Analyse der Wirkweise und des Zusammenspiels aller Automatisierungsgeräte 11, 12, 13 in dem Automatisierungssystem 10. Diesbezüglich können auf Basis der Zusammenhänge Anwendern und/oder Betreibern des Automatisierungssystems Mehrwertfunktionen bereitgestellt werden. Diese umfassen beispielsweise eine Impactanalyse bei einer Störung und/oder Ausfalls eines Automatisierungsgerätes 11, 12, 13. Weiterhin können die Zusammenhänge verwendet werden um den Einfluss auf bestimmte Leistungskennzahlen (KPI) zu ermitteln und diese zu verbessern. Zudem können die Zusammenhänge für eine vorrausschauende Wartung verwendet werden. Ein Betreiben des Automatisierungssystems 10 ist somit effizienter.

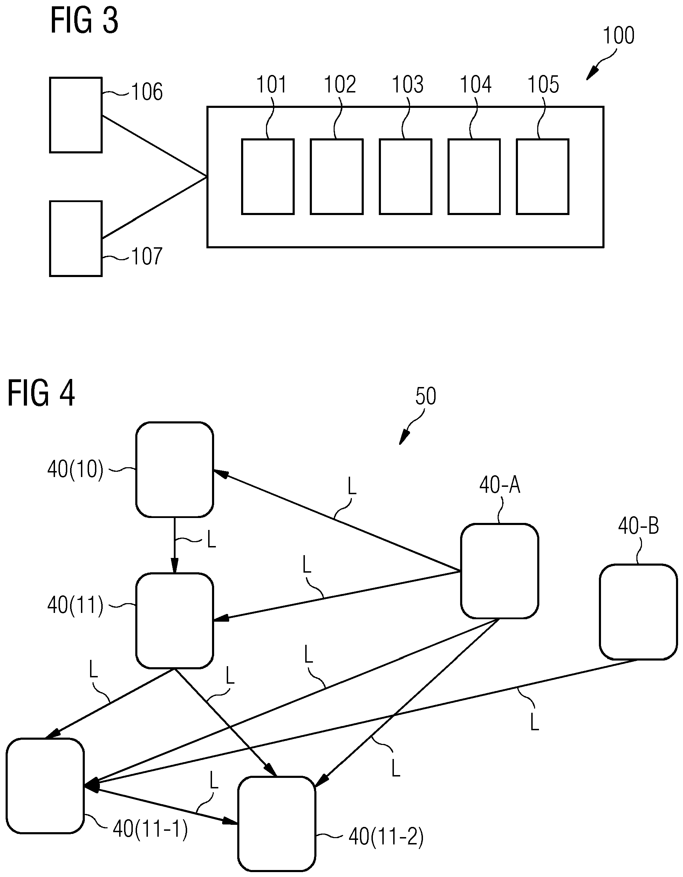

Das Automatisierungsmodel 50 kann in einer Systemmodell-Datenbank abgespeichert sein, die durch ein Datenbankmanagementsystem verwaltet wird. Die Systemmodell-Datenbank kann beispielsweise als eine SQL-Datenbank, DB4o-Datenbank, MAM-Datenbank, BaseX-Datenbank und/oder UDS-Datenbank ausgebildet sein. Die Datenbank kann in einer Speichereinheit 107 (siehe Fig. 3) gespeichert werden.

Fig. 2 zeigt ein Ablaufdiagramm zur Darstellung eines möglichen Ausführungsbeispiels eines erfindungsgemäßen Verfahrens 1.

Das Verfahren 1 umfasst bei dem dargestelltem Ausführungsbeispiel mehrere Schritte. In einem ersten Schritt S1 werden durch ein System 100 Automatisierungsdaten 20 des industriellen Automatisierungsgerätes 11, 12, 13 des industriellen Automatisierungssystems 10 und Metadaten 30, die für das Automatisierungsgerät 11, 12, 13 spezifisch sind, empfangen.

In einem zweiten Schritt S2 werden die empfangenen Automatisierungsdaten 20 und die empfangenen Metadaten 30 des industriellen Automatisierungsgerätes 11, 12, 13 jeweils in einem separaten Datenmodell 40 des jeweiligen Automatisierungsgerätes in einer Speichereinheit 102 (siehe Fig. 3) gespeichert. Jedes Datenmodell 40 umfasst einzelne Datenobjekte 41, welche die Automatisierungsdaten 20 und Metadaten 30 des betreffenden Automatisierungsgerätes 11, 12, 13 beinhalten.

In einer Ausführungsform können die Metadaten 30 in einem separaten Datenmodell 40 bereitgestellt werden.

In einem weiteren Schritt S3 werden Datenobjekteigenschaften 42 der einzelnen Datenobjekte 41 der Datenmodelle 40 ermittelt.

In einem weiteren Schritt S4 wird ein Automatisierungssystemmodell 50 des industriellen Automatisierungssystems 10 erzeugt. Hierfür erfolgt ein Verlinken derjenigen Datenobjekte 41 der Datenmodelle 40, die eine Übereinstimmung in ihren ermittelten Datenobjekteigenschaften 42 aufweisen.

In einem weiteren Schritt S5 wird das industrielle Automatisierungssystem 10 auf Basis von Informationen aus dem Automatisierungssystemmodell 50 betrieben. Die Informationen werden automatisch oder auf eine Suchanfrage eines Anwenders hin aus dem erzeugten Automatisierungssystemmodell 50 abgeleitet.

Fig. 3 zeigt ein Blockschaltbild zur Darstellung eines Ausführungsbeispiels einer erfindungsgemäßen Systems 100.

In Fig. 3 bezeichnet Bezugszeichen 100 ein System für ein Betreiben eines industriellen Automatisierungssystems 10 (siehe Fig. 1). Das System 100 umfasst mindestens eine Empfangseinheit 101, die ausgebildet ist, Automatisierungsdaten 20 des industriellen Automatisierungsgerätes 11, 12, 13 des industriellen Automatisierungssystems 10 und Metadaten 30, die Automatisierungsgerät 11, 12, 13 spezifisch sind, zu empfangen. Zudem umfasst das System 100 eine Speichereinheit 102, die ausgebildet ist, die empfangenen Automatisierungsdaten 20 und Metadaten 30 des industriellen Automatisierungsgerätes 11 in einem jeweils separaten Datenmodell 40 zu speichern. Das Datenmodell 40 umfasst einzelne Datenobjekte 41. Die Speichereinheit 102 umfasst beispielsweise eine Festplatte (HDD), einen Direktzugriffsspeicher (RAM), einen Flash-Speicher und/oder eine externe Speichervorrichtung, die mit dem System 100 in Verbindung steht. Ferner umfasst das System 100 zumindest eine Ermittlungseinheit 103, die ausgebildet ist, Datenobjekteigenschaften 42 in den einzelnen Datenobjekten 41 zu ermitteln. Zudem umfasst das System 100 zumindest eine Erzeugungseinheit 104, die ausgebildet ist, das Automatisierungssystemmodell 50 des industriellen Automatisierungssystems 10 durch ein Verlinken derjenigen Datenobjekte 41 der jeweils separaten Datenmodelle 40, die eine vollständige oder zumindest teilweise Übereinstimmung in den Datenobjekteigenschaften 42 aufweisen zu erzeugen. Das Automatisierungssystemmodell 50 kann in einer Systemmodell-Datenbank abgelegt und in der Speichereinheit 102 gespeichert werden.

Für das Automatisierungssystemmodel 50 wird grundsätzlich Text in den Datenmodellen 40 gesucht, gespeichert und entsprechend mit korrespondierendem Text verlinkt. Diesbezüglich müssen die Datenobjekte 41 der Datenmodelle 40 sehr ausführliche Daten bzw. Content enthalten und genau durch die Datenobjekteigenschaften 42 spezifiziert sein. Weitere wichtige Elemente stellen die Metadaten dar. Sie geben weitere Anhaltspunkte über die Automatisierungsgeräte 11, 12, 13. In einer Ausführungsform umfassen die Verlinkungen L (siehe Fig. 4) keine Daten der jeweiligen Datenobjekte 41, sondern umfassen Textelemente, durch die auf die entsprechenden Datenobjekte 41 in den Datenmodellen 40 zurückgegriffen werden kann. Somit werden bei einer Suchanfrage nicht alle Datenmodelle 40 durchsucht, sondern es werden lediglich gespeicherte Textelemente aus den Datenmodellen gelesen, die dann zu den entsprechenden Datenobjekten 41 in den Datenmodellen 40 verlinken. Diesbezüglich kann eine effiziente und schnelle Suche innerhalb des Automatisierungssystemmodels 50 realisiert werden.

In einer Ausführungsform kann das System 100 als ein Computer, Server, als ein Serververbund, in einer Cloudumgebung, als ein Gerät mit einem Mikrocontroller und Speicher oder als ein FPGA, in dem das Verwaltungssystem 100 als Hardware instanziiert ist, implementiert sein. Diesbezüglich kann das System 100 auch in ein bestehendes Automatisierungsgerät 11, 12, 13 des Automatisierungssystems 10 implementiert werden. Diese beispielhafte Auflistung stellt keine für sich abschließende Auflistung dar. Vielmehr sind noch weitere nicht genannte Geräte, welche in industriellen Anwendung Verwendung finden und die mit einem Netzwerk verbunden werden können, zu der beispielhaften Auflistung zu ergänzen.

In einer Ausführungsform umfasst das System 100 ein Anzeigeelement 106. Das Anzeigeelement kann als ein Display, insbesondere als ein Touch-Display ausgebildet sein. Ein Touch-Display ermöglicht eine strukturierte Anzeige von Daten innerhalb von Menüs, die über das Touch-Display angewählt werden können. Zudem können über das Touch-Display Suchanfragen eingegeben werden. Das System 100 kann das Touch-Display selbst umfassen oder Touch-Displays von weiteren Automatisierungsgeräten 11, 12, 13 des Automatisierungssystems 100, mit denen eine Kommunikationsverbindung besteht, verwenden.

In einer Ausführungsform kann das Anzeigeelement 106 als ein Webinterface ausgebildet sein. Somit können entsprechende Eingaben und Ausgaben über einen Webfähigen Browser auf einem Computer, Handheld, Laptop oder portablen Gerät dargestellt werden, wenn eine Kommunikationsverbindung zu dem System 100 besteht. Ferner kann eine Such-Oberfläche in dem Web-Interface unabhängig von der Hardware implementiert werden.

In einer Ausführungsform umfasst das System 100 eine Sucheinheit 105. Die Sucheinheit 105 ist ausgebildet, eingehende Suchanfragen, insbesondere Inhaltumfassende Suchanfragen von Anwendern, beispielsweise über die Such-Oberfläche des Webinterface zu empfangen und zu verarbeiten. Unter einem Verarbeiten ist zu verstehen, dass auf Basis der empfangenen Suchanfragen der Inhalt in der Systemmodell-Datenbank des Automatisierungssystemmodell 50 entsprechend der Verlinkung in dem Automatisierungssystemmodell 50 gesucht wird und der Anwender alle zur Verfügung stehenden Information über das Webinterface oder Touch-Display angezeigt bekommt. Beispielsweise kann der Anwender Schlagwörter oder auch komplexe Suchanfragen in die Such-Oberfläche eingeben.

In einer Ausführungsform können Suchanfragen auch zyklisch erstellt werden, so dass bestimmte Anfragen in vorgegebenen Abständen automatisch durchgeführt und dann ausgegeben werden. Hierfür können beispielsweise spezielle Suchtools, geeignete graphische Nutzerinterfaces und Suchsprachen für z.B. Knowledge-Graphen und/oder non-SQL-Datenbanken verwendet werden. Automatische Anfragen und Ausgaben können beispielweise für das automatische Monitoring und vorausschauende Wartung eines Automatisierungssystems 10 oder von Automatisierungsgeräten 11, 12, 13 verwendet werden.

In einer Ausführungsform kann eine Verlaufsübersicht der Suchanfragen erstellt werden, die dann z.B. analysiert werden kann. Die Verlaufsübersicht kann verwendet werden, um einem Anwender gleiche und/oder typische Abfragen für das System 100 vorzuschlagen. Die Verlaufsübersicht kann beispielsweise über die Anzahl der Nachfragen, die Art und/oder den Typ der Nachfragen in einem Query-Ranking gespeichert werden. Das Query-Ranking kann in der Speichereinheit 102 gespeichert werden. Die Suchumfragen umfassen beispielsweise transaktionsorientierte Suchanfragen, navigationsorientierte Suchanfragen, informationsorientierte Suchanfragen. Die transaktionsorientierte Suchumfrage umfasst Anfragen, die zeigen, dass der Anwender eine Aktion ausführen möchte. Die navigationsorientierte Suchanfrage umfasst Anfragen, die zeigen, dass der Anwender zu einem bestimmten Bereich gelangen möchte. Die informationsorientierte Suchumfrage umfasst Anfragen, die zeigen, dass der Nutzer eine Information sucht.

In einer Ausführungsform können entsprechende Vorschläge für User-Anfragen auch ohne Berücksichtigung einer Verlaufsübersicht alleine aus einer Analyse des erzeugten Automatisierungssystemmodells 50 bzw. des Shop-Floor-Modells erzeugt werden.

Fig. 4 zeigt ein Blockdiagramm zur Darstellung eines Ausführungsbeispiels eines erfindungsgemäßen Automatisierungssystemmodells.

In Fig. 4 ist ein beispielhaftes Automatisierungssystemmodell 50 dargestellt. Das Bezugszeichen 40(10) bezeichnet das Datenmodell für das Automatisierungssystem 10. Zudem sind weitere Datenmodelle 40-A, 40-B dargestellt. Das Datenmodell 40-A umfasst beispielsweise die Daten des E-Plans und beschreibt die elektrische Verschaltung der Automatisierungsgeräte 11, 12, 13 in dem Automatisierungssystem 10. Das Datenmodell 40-B umfasst beispielsweise das Automatisierungsprojekt für ein Automatisierungsgerät 11, 12, 13 des Automatisierungssystems 10. Ferner ist das Datenmodell 40(11) des Automatisierungsgerätes 11, beispielsweise eines Montagebandes dargestellt. Das physikalische Montageband umfasst mehrere physikalische Komponenten, die wiederum selbst ein einzelnes Automatisierungsgerät 11, 12, 13, z.B. ein elektrischer Motor oder Sensor sind. Diese Automatisierungsgeräte, als Sub-Komponenten werden durch ein separates Datenmodel 40 abgebildet. Diesbezüglich kann der Knowledge-Graph oder die Ontologie in einem hohen Detailierungsgrad eine Vielzahl an Datenmodellen 40 umfassen. Das Datenmodel 40(11-1) umfasst die Daten des Motors des Montagebandes und das Datenmodell 40(11-2) umfasst die Daten der Sensoren des Montagebandes. Die Datenmodelle 40(10), 40(11), 40-A, 40-B, 40(11-1) und 40(11-2) umfassen Daten und werden zu einem Automatisierungssystemmodel 50 über die Verlinkung L mit einander verlinkt. Hierbei stellen die Verlinkung L die eigentlichen Relationen dar und verdeutlichen das Zusammenspiel der Datenmodelle und somit der Automatisierungsgeräte 11, 12, 13 in der physikalischen Welt.

Durch die Ermittlungseinheit 103 des Systems 100 werden Datenobjekteigenschaften 42 in den einzelnen Datenobjekten 41 der einzelnen Datenmodelle 40 ermittelt. Stimmen beispielsweise Datenobjekteigenschaften 42 zwischen dem Datenmodell 40-A des elektrischen Schaltplans vollständig oder wenigstens teilweise mit Datenobjekteigenschaften 42 des Datenmodells 40(11-2) des elektrischen Motors überein, kann eine Verlinkung L zwischen dem Datenmodel 40(11-1) und dem Datenmodell 40-A erstellt werden. Dies stellt nur beispielhaft das Verfahren zum Erzeugen der Verlinkung des Automatisierungssystemmodells 50 dar. Durch die Verlinkung des Datenmodelle 40 kann mittels einer Suchanfrage über alle in dem Automatisierungssystemmodell 50 verlinkten Datenmodelle 40 gesucht werden und alle zur Verfügung stehenden Informationen, entsprechend der Suchanfrage, können ausgegeben werden. Dies ermöglicht einen effizienteren Betrieb des Automatisierungssystems 10 durch eine schnellere Lösungsfindung bei Störungen und Betriebsfehlern in dem Automatisierungssystem 10 und/oder den Automatisierungsgeräten 11, 12, 13.

### Zusammenfassung der Erfindung

Zusammenfassend betrifft die vorliegende Erfindung ein Verfahren und ein System zum Betreiben eines industriellen Automatisierungssystems 10, wobei das industrielle Automatisierungssystem 10 mindestens ein industrielles Automatisierungsgerät 11, 12, 13 umfasst. Das Verfahren umfasst die Schritte:
Empfangen S1 durch ein System 100 Automatisierungsdaten 20 des industriellen Automatisierungsgerätes 11, 12, 13 des industriellen Automatisierungssystems 10 und Metadaten 30, die für das Automatisierungsgerät 11, 12, 13 spezifisch sind;
Speichern S2 der empfangenen Automatisierungsdaten 20 und der empfangenen Metadaten 30 des industriellen Automatisierungsgerätes 11, 12, 13 jeweils in einem separaten Datenmodell 40 des jeweiligen Automatisierungsgerätes 11, 12, 13 in einer Speichereinheit 102 des Systems 100, wobei jedes Datenmodell 40 einzelne Datenobjekte 41 umfasst, welche die Automatisierungsdaten 20 und Metadaten 30 des betreffenden Automatisierungsgerätes 11, 12, 13 beinhalten;
Ermitteln S3 von Datenobjekteigenschaften 42 der einzelnen Datenobjekte 41;
Erzeugen S4 eines Automatisierungssystemmodells 50 des industriellen Automatisierungssystems 10 durch Verlinken derjenigen Datenobjekte 41 Datenmodelle 40, die eine Übereinstimmung in ihren ermittelten Datenobjekteigenschaften 42 aufweisen; und
Betreiben S5 des industriellen Automatisierungssystems 10 auf Basis von Informationen aus dem Automatisierungssystemmodell 50, die automatisch oder auf eine Suchanfrage eines Anwenders hin aus dem erzeugten Automatisierungssystemmodell 50 abgeleitet werden.

Diesbezüglich wird automatisch unter Verwendung der in einem Automatisierungssystem zur Verfügung stehenden Daten ein Automatisierungssystemmodell erzeugt, in dem die zueinander gehörigen Daten mit einander verlinkt sind und aus welchen Informationen zum Betreiben des Automatisierungssystems abgeleitet werden können. Das Automatisierungssystemmodell kann für Automatisierungssystemspezifische Anfragen und Lösung von Betriebsfehlern eingesetzt werden.

### Bezugszeichenliste

- 1: Verfahren
- 10: Automatisierungssystem
- 11: Automatisierungsgerät
- 12: Automatisierungsgerät
- 13: Automatisierungsgerät
- 20: Automatisierungsdaten
- 30: Metadaten
- 40: Datenmodell
- 41: Datenobjekte
- 42: Datenobjekteigenschaften
- 50: Automatisierungssystemmodell
- 100: System
- 101: Empfangseinheit
- 102: Speichereinheit
- 103: Ermittlungseinheit
- 104: Erzeugungseinheit
- 105: Ausführungseinheit
- 106: Sucheinheit
- 107: Anzeigeelement
- S1-S5: Verfahrensschritte

## Patentansprüche

1. Verfahren (1) zum Betreiben eines industriellen Automatisierungssystems (10), wobei das industrielle Automatisierungssystem (10) mindestens ein industrielles Automatisierungsgerät (11, 12, 13) umfasst, mit den Schritten:
- Empfangen (S1) durch ein System (100) von Automatisierungsdaten (20) des industriellen Automatisierungsgerätes (11, 12, 13) des industriellen Automatisierungssystems (10) und von Metadaten (30), die für das Automatisierungsgerät (11, 12, 13) spezifisch sind;
- Speichern (S2) der empfangenen Automatisierungsdaten (20) und der empfangenen Metadaten (30) des industriellen Automatisierungsgerätes (11, 12, 13) jeweils in einem separaten Datenmodell (40) des jeweiligen Automatisierungsgerätes (11, 12, 13) in einer Speichereinheit (102) des Systems (100), wobei jedes Datenmodell (40) einzelne Datenobjekte (41) umfasst, welche die Automatisierungsdaten (20) und Metadaten (30) des betreffenden Automatisierungsgerätes (11, 12, 13) beinhalten;
- Ermitteln (S3) von Datenobjekteigenschaften (42) der einzelnen Datenobjekte (41) der Datenmodelle (40);
- Erzeugen (S4) eines Automatisierungssystemmodells (50) des industriellen Automatisierungssystems (10) durch Verlinken derjenigen Datenobjekte (41) der Datenmodelle (40), die eine Übereinstimmung in ihren ermittelten Datenobjekteigenschaften (42) aufweisen; und
- Betreiben (S5) des industriellen Automatisierungssystems (10) auf Basis von Informationen aus dem Automatisierungssystemmodell (50), die automatisch oder auf eine Suchanfrage eines Anwenders hin aus dem erzeugten Automatisierungssystemmodell (50) abgeleitet werden.

2. Verfahren nach Anspruch 1, wobei das Verlinken der Datenobjekte (41) durch ein semantisches Verlinken erfolgt.

3. Verfahren nach einem der vorherigen Ansprüche, wobei die Automatisierungsdaten (20) umfassen:
- Sensordaten,
- Aktuator-Daten,
- Berechnungsdaten und/oder
- Kommunikationsdaten.

4. Verfahren nach einem der vorherigen Ansprüche, wobei die Metadaten (30) umfassen:
- Annotationen, Spezifikationen und/oder Daten zur Beschreibung des industriellen Automatisierungsgerätes (11, 12, 13),
- 3D Modell des industriellen Automatisierungsgerätes (11, 12, 13),
- Netzwerkdaten und/oder Netzwerkteilnehmer des Automatisierungssystems (10),
- Lokalisierungsinformation und/oder
- Automatisierungsprojektdaten.

5. Verfahren nach einem der vorherigen Ansprüche, wobei das strukturierte Datenmodell (40) als ein Knowledge-Graph oder als eine Ontologie ausgebildet ist.

6. Verfahren nach einem der vorherigen Ansprüche, wobei das Ermitteln (S3) der Datenobjekteigenschaften (42) der Datenobjekte (41) des strukturierten Datenmodells (40) ein Clustern der Datenobjekte (41) umfasst.

7. Verfahren nach einem der vorherigen Ansprüche, wobei das erzeugte Automatisierungssystemmodell (50) in einer Systemmodell-Datenbank des industriellen Automatisierungssystems (10) oder des Systems (100) gespeichert wird.

8. System (100) zum Betreiben eines industriellen Automatisierungssystems (10), wobei das industrielle Automatisierungssystem (10) mindestens ein industrielles Automatisierungsgerät (11, 12, 13) umfasst, umfassend:
- zumindest eine Empfangseinheit (101), die ausgebildet ist, Automatisierungsdaten (20) des industriellen Automatisierungsgeräts (11, 12, 13) des industriellen Automatisierungssystems (10) und Metadaten (30) die für das Automatisierungsgerät (11, 12, 13) spezifisch sind, zu empfangen;
- zumindest eine Speichereinheit (102), die ausgebildet ist, die empfangenen Automatisierungsdaten (20) und empfangenen Metadaten (30) des industriellen Automatisierungsgeräts (11) in einem jeweils separaten Datenmodell (40)) des jeweiligen Automatisierungsgerätes (11, 12, 13) zu speichern, wobei jedes Datenmodell (40) einzelne Datenobjekte (41) umfasst, welche die Automatisierungsdaten (20) und Metadaten (30) des betreffenden Automatisierungsgerätes (11, 12, 13) beinhalten;
- zumindest eine Ermittlungseinheit (103), die ausgebildet ist, Datenobjekteigenschaften (42) in den einzelnen Datenobjekten (41) der Datenmodelle (40) zu ermitteln;
- zumindest eine Erzeugungseinheit (104), die ausgebildet ist, ein Automatisierungssystemmodell (50) des industriellen Automatisierungssystems (10) durch Verlinken derjenigen Datenobjekte (41) der Datenmodelle (40), die eine Übereinstimmung in ihren Datenobjekteigenschaften (42) aufweisen, zu erzeugen; und
- zumindest eine Ausführungseinheit (105), die ausgebildet ist, das Automatisierungssystem (10) auf Basis von Informationen die automatisch oder auf eine Suchanfrage eines Anwenders hin aus dem erzeugten Automatisierungssystemmodell (50) abgeleitet werden.

9. System (100) nach Anspruch 8, wobei das Verlinken der Datenobjekte (41) durch ein semantisches Verlinken erfolgt.

10. System (100) nach einem der vorherigen Ansprüche 8 und 9, wobei das System (100) eine Sucheinheit (106) umfasst, die ausgebildet ist, Suchanfragen eines Anwenders zu erfassen und den Inhalt in dem erzeugten Automatisierungssystemmodell (50) zu finden.

11. System (100) nach Anspruch 10, wobei die Suchanfragen entsprechend der Anzahl der Nachfragen und des Typs in einem Query-Ranking gespeichert werden.

12. System (100) nach einem der vorherigen Ansprüche 8 bis 11, wobei das System (100) ein Anzeigeelement (107) umfasst, das insbesondere als ein Touch-Display oder als ein Webinterface ausgebildet ist.

13. System (100) nach einem der vorherigen Ansprüche 11 und 12, wobei das Query-Ranking in der Speichereinheit (102) gespeichert ist.

14. Computerprogramm mit Programmcode für das Ausführen eines Verfahrens (1) nach einem der vorherigen Ansprüche 1 bis 7, wenn das Computerprogramm auf einem elektronischen Gerät ausgeführt wird.
